# EUROPÄISCHE PATENTANMELDUNG

(11) **EP 4 555 843 A1**
(43) Veröffentlichungstag der Anmeldung: **21.05.2025**
(21) Anmeldenummer: 23210264.0
(22) Anmeldetag: 16.11.2023
(51) Int. Cl.: A01B 39/18, A01M 21/02, A01M 21/04

(54) **FAHRZEUG ZUM BEKÄMPFEN VON UNKRAUT ZWISCHEN KULTURPFLANZEN UND VERFAHREN ZUM BETRIEB EINES SOLCHEN FAHRZEUGS**

(71) Anmelder: Pfeifer & Langen IP GmbH, 50858 Köln (DE)
(72) Erfinder: Grupp, Timo, 73111 Lauterstein (DE); Kratzer, Florian, 86695 Allmannshofen (DE); Barthel, Johannes, 76139 Karlsruhe (DE); Di Marco, Daniel, 70469 Stuttgart (DE); Leidenfrost, Roland, 71717 Beilstein (DE); Gohlke, Maurice, 70178 Stuttgart (DE); Eßer, Clemens, 41812 Erkelenz (DE); Ungru, Dr. Alexander Hubertus, 50733 Köln (DE)
(74) Vertreter: Kutzenberger Wolff & Partner

(57) **Zusammenfassung**

Die vorliegende Erfindung betrifft ein Fahrzeug (100) zum Bekämpfen von Unkraut zwischen Kulturpflanzen, welches, insbesondere automatisiert, in einer Fahrtrichtung (F) bewegbar ist und mindestens eine Hackvorrichtung (104) aufweist, die dazu eingerichtet ist, Strukturen des Unkrauts während einer Bewegung des Fahrzeugs (100) in der Fahrtrichtung (F) durch mechanische Einwirkung zu zerstören, und mit einer Sprühvorrichtung (1) zur Abgabe eines Pflanzenschutz- oder Dünge-, Biostimulanz-, Pflanzenhilfs- oder Bodenhilfsmittels, insbesondere Herbizids. Ferner betrifft die Erfindung ein Verfahren zum Betrieb eines derartigen Fahrzeugs (100).

## Beschreibung

### Stand der Technik

Die vorliegende Erfindung betrifft ein Fahrzeug zum Bekämpfen von Unkraut zwischen Kulturpflanzen. Ferner betrifft die Erfindung ein Verfahren zum Betrieb eines solchen Fahrzeugs.

In Kulturpflanzenbeständen wird die unerwünschte Begleitvegetation in der Regel als Unkraut, Beikraut oder auch Kulturpflanzenbegleiter bezeichnet. Solche Unkräuter treten typischerweise zu den Kulturpflanzen in Konkurrenz um Nährstoffe, Lichteinstrahlung sowie Wasser und verringern hierdurch den Ertrag einer landwirtschaftlichen Fläche. Daher ist es in der Landwirtschaft von herausragender Bedeutung, Maßnahmen gegen Unkräuter zu ergreifen. Zum Bekämpfen von Unkräutern, werden dabei unter anderem folgende drei Ansätze verfolgt.

Insbesondere im ökologischen Ackerbau werden zwischen den Kulturpflanzen wachsende Unkräuter durch mechanische Einwirkung, beispielsweise durch Unkrautjät- oder Hackwerkzeuge entfernt. Dies kann manuell erfolgen oder durch an Fahrzeugen angeordnete Unkrautjät- bzw. Hackvorrichtungen, die gezielt nur auf die Unkräuter einwirken. Ein derartiges Fahrzeug zum automatisierten Jäten ist beispielsweise aus der DE 20 2021 104 737 U1 bekannt.

In der konventionellen Landwirtschaft ist es hingegen üblich, Pflanzenschutzmittel, beispielsweise Herbizide, großflächig auszubringen. Durch die Herbizide können Unkräuter wirkungsvoll bekämpft werden. Allerdings können bei der großflächigen Anwendung der Herbizide Spritznebel oder Abriebstäube in benachbarte Gewässer oder andere Landschaftsstrukturen gelangen. Auch durch Abschwemmung nach Regen sowie über Drainageleitungen fließen sie in Gewässer und können in das Trinkwasser gelangen. Es besteht deshalb ein steigendes Interesse, die eingesetzte Menge an Herbiziden zu reduzieren. Dadurch können Kosten gesenkt und die Belastung der umgebenden Vegetation verringert werden.

Schließlich sind Lösungen bekannt, bei denen zwischen den Kulturpflanzen wachsende Unkräuter automatisiert erkannt werden. Über Sprühvorrichtungen werden dann gezielt auf diese erkannten Unkräuter Herbizide ausgebracht. Ein entsprechendes Verfahren wird als "spot spraying" bezeichnet und ist beispielsweise in WO 2022/195380 A1 beschrieben.

### Offenbarung der Erfindung

Vor diesem Hintergrund ist es **Aufgabe** der vorliegenden Erfindung, ein Fahrzeug und ein Verfahren zu dessen Betrieb mit verbesserten Fähigkeiten zum Bekämpfen von Unkraut anzugeben.

Zur Lös u n g der Aufgabe wird ein Fahrzeug zum Bekämpfen von Unkraut zwischen Kulturpflanzen vorgeschlagen, welches, insbesondere automatisiert, in einer Fahrtrichtung bewegbar ist und mindestens eine Hackvorrichtung aufweist, die dazu eingerichtet ist, Strukturen des Unkrauts während einer Bewegung des Fahrzeugs in der Fahrtrichtung durch mechanische Einwirkung zu zerstören, sowie mindestens eine Sprühvorrichtung zur Abgabe eines Pflanzenschutz-, Dünge-, Biostimulanz-, Pflanzenhilfs- oder Bodenhilfsmittels, insbesondere Herbizids, aufweist.

Das erfindungsgemäße Fahrzeug vereint die Vorteile des Einsatzes von Hackvorrichtungen und Pflanzenschutz-, Dünge-, Biostimulanz-, Pflanzenhilfs- oder Bodenhilfsmitteln, insbesondere Herbiziden. Durch die Hackvorrichtungen können zwischen den Kulturpflanzen angeordnete Unkräuter automatisiert zerstört werden. Durch die Sprühvorrichtung kann zudem ein geschützter, insbesondere herbizidgeschützter, Bereich um die Kulturpflanze gebildet werden, ohne dass das Pflanzenschutz-, Dünge-, Biostimulanz-, Pflanzenhilfs- oder Bodenhilfsmittel, insbesondere Herbizid, großflächig ausgebracht werden müsste. Insofern kann die Fähigkeit des Fahrzeugs zum Bekämpfen von Unkraut verbessert werden.

Auch wenn im Folgenden lediglich Bezug auf Pflanzenschutzmittel, insbesondere Herbizide, oder Düngemittel genommen wird, kann die Sprühvorrichtung der erfindungsgemäßen Vorrichtung gleichwohl zum Ausbringen von Biostimulanz-, Pflanzenhilfs- oder Bodenhilfsmitteln verwendet werden.

Unter einer Sprühvorrichtung im Sinne der Erfindung wird eine Vorrichtung mit genau einer Abgabeeinheit zur Abgabe einer sprühfähigen Substanz, beispielsweise mit genau einer Düse, verstanden. Das erfindungsgemäße Fahrzeug umfasst bevorzugt mehrere Sprühvorrichtungen. Beispielsweise können mehrere Sprühvorrichtungen vorgesehen sein, die in einer Querrichtung des Fahrzeugs voneinander beabstandet angeordnet sind, so dass die Sprühvorrichtungen parallel ein Pflanzenschutz- oder Düngemittel, insbesondere Herbizid, auf nebeneinander angeordnete Stellen abgeben können. An diesen Stellen können beispielsweise zwei Kulturpflanzen angeordnet sein, die in unterschiedlichen Reihen auf dem Untergrund gepflanzt sind.

Bevorzugt ist die eine oder sind die mehreren Sprühvorrichtungen feststehend an einem Grundkörper des Fahrzeugs, beispielsweise an einem Fahrzeugchassis, angeordnet. Alternativ kann vorgesehen sein, dass die eine oder sind die mehreren Sprühvorrichtungen in einer Querrichtung des Fahrzeugs bewegbar an dem Grundkörper des Fahrzeugs angeordnet sind. Hierbei können die eine oder sind die mehreren Sprühvorrichtungen jeweils über einen der jeweiligen Sprühvorrichtung zugewiesenen Antrieb in Querrichtung bewegt werden, beispielsweise um die Abgabe des Pflanzenschutz- oder Düngemittels, insbesondere Herbizids, an einer Stelle zu ermöglichen, die gegenüber einer Reihe von Kulturpflanzen versetzt angeordnet ist (beispielsweise, weil eine Kulturpflanze aus dieser Reihe ragt).

Bevorzugt ist die mindestens eine Hackvorrichtung als gegenüber dem Fahrzeug feststehende Hackvorrichtung ausgebildet, beispielsweise als feststehendes Hackschar. Eine derartige feststehende Hackvorrichtung kann beispielsweise zum Hacken zwischen zwei Reihen von Kulturpflanzen verwendet werden.

Alternativ bevorzugt ist die mindestens eine Hackvorrichtung als gegenüber dem Fahrzeug bewegbare Hackvorrichtung ausgebildet, beispielsweise als bewegbares, insbesondere schwenkbares, Hackschar. Die bewegbare Hackvorrichtung kann zum Hacken innerhalb einer Reihe von Kulturpflanzen zwischen diesen Kulturpflanzen und/oder unter den Blättern der Kulturpflanzen verwendet werden. Beispielsweise kann die bewegbare Hackvorrichtung in die Reihe zwischen die Kulturpflanzen hinein- und wieder hinausbewegt, insbesondere hinein- und wieder hinausgeschwenkt werden, beispielsweise um Unkraut in der Reihe zwischen den Kulturpflanzen zu hacken.

Gemäß einer vorteilhaften Ausgestaltung der Erfindung ist vorgesehen, dass die Sprühvorrichtung in der Fahrtrichtung vor der Hackvorrichtung, insbesondere vor der feststehenden Hackvorrichtung, angeordnet ist, so dass die Sprühvorrichtung während der Bewegung des Fahrzeugs in der Fahrtrichtung ein Pflanzenschutz- oder Düngemittel, insbesondere ein Herbizid, an einer Stelle abgeben kann, bevor die Hackvorrichtung diese Stelle erreicht. Durch die mindestens eine Hackvorrichtung kann - insbesondere bei trockener Witterung - Staub aufgewirbelt werden. Dieser Staub kann - insbesondere, wenn er in den Bereich zwischen Sprühvorrichtung und dem Untergrund gelangt - das Aufbringen des Pflanzenschutz- oder Düngemittels, insbesondere Herbizids, auf die Kulturpflanze und deren Umgebung beeinträchtigen und die Wirksamkeit des Pflanzenschutz- oder Düngemittels, insbesondere Herbizids, unerwünscht reduzieren. Die Sprühvorrichtung ist in Fahrtrichtung vor der Hackvorrichtung angeordnet. Insofern ist die Sprühvorrichtung in Längsrichtung des Fahrzeugs gegenüber der Hackvorrichtung versetzt angeordnet. Durch die Anordnung der Sprühvorrichtung in Fahrtrichtung vor der Hackvorrichtung kann erreicht werden, dass das Pflanzenschutz- oder Düngemittel, insbesondere Herbizid, auf die Kulturpflanze bzw. deren Umgebung abgegeben wird bevor die Hackvorrichtung auf die unmittelbare Umgebung der Nutzpflanze einwirkt. Etwaige Staubentwicklung beim Einsatz der Hackvorrichtung kann die Wirkung des Pflanzenschutz- oder Düngemittels, insbesondere Herbizids, dann nicht mehr so stark beeinträchtigen. Insofern kann die Wirksamkeit des Herbizids verbessert werden.

Gemäß einer vorteilhaften Ausgestaltung der Erfindung ist vorgesehen, dass die Sprühvorrichtung in einer senkrecht zur Fahrtrichtung angeordneten Querrichtung gegenüber der Hackvorrichtung beabstandet angeordnet ist. Hierdurch wird es möglich, die Sprühvorrichtung durch das Bewegen des Fahrzeugs über einer Reihe von Kulturpflanzen linear entlang zu bewegen, während die Hackvorrichtung seitlich an dieser Reihe von Kulturpflanzen vorbei bewegt wird. Die Hackvorrichtung kann von seitlich der Kulturpflanzen aus auf das Unkraut einwirken. Die Sprühvorrichtung kann das Pflanzenschutz- oder Düngemittel, insbesondere Herbizid, hingegen von oben auf die Kulturpflanzen und deren unmittelbare Umgebung abgeben.

Gemäß einer vorteilhaften Ausgestaltung der Erfindung ist vorgesehen, dass das Fahrzeug mehrere Hackvorrichtungen aufweist und die Sprühvorrichtung in einer senkrecht zur Fahrtrichtung angeordneten Querrichtung gegenüber einer ersten der Hackvorrichtungen und gegenüber einer zweiten der Hackvorrichtungen beabstandet angeordnet ist. Bevorzugt ist die Sprühvorrichtung in der Querrichtung zwischen der ersten und der zweiten Hackvorrichtung angeordnet. Bei einer derartigen Ausgestaltung kann die Sprühvorrichtung über einer Reihe von Kulturpflanzen linear bewegt werden, während die Hackvorrichtungen auf zwei sich gegenüberliegenden Seiten dieser Reihe von Kulturpflanzen an diesen vorbei bewegt wird. Die Hackvorrichtungen können somit von beiden Seiten der Kulturpflanzen aus auf das Unkraut einwirken. Die Sprühvorrichtung kann das Pflanzenschutz- oder Düngemittel, insbesondere Herbizid, von oben auf die Kulturpflanzen und deren unmittelbare Umgebung abgeben.

Besonders bevorzugt umfasst das Fahrzeug mehrere Hackvorrichtungen, insbesondere mindestens eine gegenüber dem Fahrzeug feststehende und eine gegenüber dem Fahrzeug bewegbare Hackvorrichtung. Besonders bevorzugt sind die mehreren Hackvorrichtungen zu Hackmodulen zusammengefasst, wobei jedes Hackmodul einer Sprühvorrichtung zugewiesen ist. Eine derartige Kombination aus Hackmodul und Sprühvorrichtung kann zum Bekämpfen von Unkraut im Bereich einer Reihe von Kulturpflanzen eingerichtet sein. Beispielsweise kann das Hackmodul zwei bewegbare Hackvorrichtungen umfassen, wobei die Sprühvorrichtung in der Querrichtung des Fahrzeugs zwischen den beiden bewegbaren Hackvorrichtungen angeordnet ist, so dass die Hackvorrichtungen bei der Bewegung des Fahrzeugs von zwei gegenüberliegenden Seiten auf die Zwischenräume zwischen den Kulturpflanzen einer Reihe einwirken können, während die Sprühvorrichtung auf die Kulturpflanzen einwirkt. Ferner kann das Hackmodul zwei feststehende Hackvorrichtungen umfassen, wobei die Sprühvorrichtung in der Querrichtung des Fahrzeugs zwischen den beiden feststehenden Hackvorrichtungen angeordnet ist, so dass die beiden feststehenden Hackvorrichtungen auf die Bereiche neben der Reihe an Kulturpflanzen einwirken können, während die Sprühvorrichtung auf die Kulturpflanzen einwirkt.

Gemäß einer vorteilhaften Ausgestaltung der Erfindung ist vorgesehen, dass das Fahrzeug ein zumindest in einer Höhenrichtung senkrecht zur Fahrtrichtung (und senkrecht zur Querrichtung) bewegbar an einem Fahrgestell des Fahrzeugs angebundenes Tastrad zum Abrollen an einem Untergrund aufweist, und die Sprühvorrichtung derart mit dem Tastrad gekoppelt ist, dass die Sprühvorrichtung einer Bewegung des Tastrads in der Höhenrichtung folgen kann. Durch eine derartige Anordnung des Sprühvorrichtung kann sichergestellt werden, dass sich die Sprühvorrichtung auch bei unebenem Untergrund möglichst in einem konstanten Abstand zu dem Untergrund befindet.

Gemäß einer vorteilhaften Ausgestaltung der Erfindung ist vorgesehen, dass die Sprühvorrichtung eine Flachstrahldüse aufweist, die derart angerordnet ist, dass sie in einer Fahrtrichtung des Fahrzeugs einen ersten Abgabewinkel aufweist, der geringer ist als ein zweiter Abgabewinkel in einer zur Fahrtrichtung senkrecht angeordneten Querrichtung. Eine derartige Ausgestaltung bietet den Vorteil, dass die Erstreckung des Spritzbilds in der Fahrtrichtung des Fahrzeugs durch die Wahl der Anzahl an Sprühstößen einstellbar ist. Beispielsweise kann eine erhöhte Anzahl an Sprühstößen abgegebenen werden, um ein in Fahrtrichtung längeres bzw. breiteres Spritzbild zu erhalten.

In diesem Zusammenhang hat sich eine Ausgestaltung der Erfindung als konstruktiv vorteilhaft erwiesen, bei welcher der erste Abgabewinkel im Bereich von 5 Grad bis 10 Grad, insbesondere bei 7,5 Grad, liegt und der zweite Abgabewinkel im Bereich von 25 Grad bis 30 Grad, insbesondere bei 29 Grad, liegt.

Gemäß einer vorteilhaften Ausgestaltung der Erfindung ist vorgesehen, dass die Hackvorrichtung ein drehbar angeordnetes Hackelement, insbesondere einen Fräskopf oder ein Hackschar, aufweist.

Gemäß einer vorteilhaften Ausgestaltung der Erfindung ist vorgesehen, dass das Fahrzeug eine Erfassungsvorrichtung aufweist, die dazu eingerichtet ist, eine Stelle an welcher eine Kulturpflanze angeordnet ist, während der Fahrt des Fahrzeugs zu erkennen.

Bevorzugt ist vorgesehen, dass die Erfassungsvorrichtung eine elektromagnetische, insbesondere optische, Erfassungsvorrichtung ist, beispielsweise eine Kamera aufweist, Insofern kann die Erfassungsvorrichtung zum Erfassen der Beschaffenheit des Bodens, insbesondere zum Abtasten des Bodens, eingerichtet sein. Alternativ kann die Erfassungsvorrichtung eine akustische Erfassungsvorrichtung sein. Es kann insofern eine Lidar-, Radar- oder Sonar-Erfassungsvorrichtung verwendet werden. Weiter alternativ ist es möglich, dass die Erfassungsvorrichtung eine Kombination mehrerer der vorgenannten Techniken enthält. Optional kann zur Erkennung der Stelle, an welcher eine Kulturpflanze angeordnet ist, zusätzlich ein Satellitennavigationssystem eingesetzt werden, welchem die Positionen der Kulturpflanzen bekannt sind.

Gemäß einer vorteilhaften Ausgestaltung der Erfindung ist vorgesehen, dass das Fahrzeug eine Steuereinrichtung zur Steuerung der Sprühvorrichtung aufweist, die dazu konfiguriert ist, die Sprühvorrichtung während der Fahrt des Fahrzeugs zur Abgabe eines Pflanzenschutz- oder Düngemittels, insbesondere eines Herbizids, an der durch die Erfassungsvorrichtung erkannten Stelle zu veranlassen. Eine derartige Ausgestaltung ermöglicht die Bildung eines geschützten, insbesondere herbizidgeschützten, Bereichs um die Kulturpflanze herum, ohne dass das das Pflanzenschutz- oder Düngemittel, insbesondere Herbizid, großflächig ausgebracht werden müsste. Es ist dabei nicht erforderlich, dass durch die Erfassungsvorrichtung ein Unkraut erkannt wird. Dadurch, dass die Stelle erkannt wird, an welcher eine Kulturpflanze angeordnet ist, kann die Kulturpflanze auch gegenüber solchen Unkräutern wirkungsvoll geschützt werden, die optisch nicht erfassbar sind, beispielsweise, weil sie von der Kulturpflanze verdeckt werden, oder sich in einem frühen Entwicklungsstadium befinden.

Gemäß einer vorteilhaften Ausgestaltung der Erfindung ist vorgesehen, dass die Steuereinrichtung dazu eingerichtet ist, als Eingangsdaten eine derzeitige Fahrzeugposition und/oder eine derzeitigen Fahrzeuggeschwindigkeitsvektor und/oder Positionen der Kulturpflanzen zu empfangen.

Gemäß einer vorteilhaften Ausgestaltung der Erfindung ist vorgesehen, dass die Steuereinrichtung dazu eingerichtet ist, die Sprühvorrichtung zur Abgabe mehrerer aufeinanderfolgender Sprühstöße zu veranlassen, so dass sich an der durch die Erfassungsvorrichtung erkannten Stelle ein Spritzbild ergibt, welches durch zumindest teilweise Überlappung der durch die aufeinanderfolgenden Sprühstöße hervorgerufenen Einzel-Spritzbilder gebildet wird. Durch die Überlappung der Einzel-Spritzbilder kann ein Spritzbild mit einer homogeneren Verteilung erzeugt werden. Insbesondere in den Randbereichen können die Einzel-Spritzbilder einen unerwünscht großen Abfall der Intensität an abgegebenem Pflanzenschutz- oder Düngemittel, insbesondere Herbizid, aufweisen. Durch das Überlappen insbesondere in diesen Randbereichen kann der Abfall der Intensität kompensiert und eine insgesamt homogenere Verteilung des Pflanzenschutz- oder Düngemittels, insbesondere Herbizids, erreicht werden. Bevorzugt ist die Steuereinrichtung dazu eingerichtet, die Sprühvorrichtung zur Abgabe von zwei, drei, vier oder fünf Sprühstößen zu veranlassen. Mit einer derartigen Anzahl kann eine gute Homogenität bei gleichzeitig geringer Anzahl an Sprühstößen erreicht werden.

Die Sprühvorrichtung umfasst bevorzugt ein Ventil, welches über ein pulsförmiges Signal ansteuerbar ist. Über die Wahl der Dauer des pulsförmigen Signals kann eine Durchflussmenge an Pflanzenschutz- oder Düngemittel, insbesondere Herbizid, pro Sprühstoß eingestellt werden. Die Amplitude des pulsförmigen Signals ist bevorzugt konstant. Das pulsförmige Signal wird bevorzugt von der Steuereinrichtung bereitgestellt. Die Steuereinrichtung errechnet die Parameter Pulsfrequenz, Pulsdauer, sowie Zu- und Abschaltzeitpunkt des Pulssignals für das Ventil der Sprühvorrichtung - sofern mehrere Sprühvorrichtungen vorhanden sind, für jedes Ventil der Sprühvorrichtungen - basierend auf einem zuvor aufgenommenen Kennfeld der jeweiligen Sprühvorrichtung. Das Kennfeld gibt Auskunft über die zu erwartende Durchflussmenge bei der Variation von Betriebsdruck und Pulsdauer. Aufgrund der Verwendung eines düsenspezifischen Kennfelds können Ventile und/oder Düsen mit verwendet werden, deren Betriebsdaten unterschiedlich voneinander sind - beispielsweise, weil sie eine relativ große Fertigungstoleranz aufweisen. Das Ventil kann beispielsweise ein Magnetventil sein. Dabei wird ein Stößel gegen eine Federkraft durch ein durch eine Spule induziertes Magnetfeld von der offenen in die geschlossene Position des Ventils oder umgekehrt ausgelenkt. Neben der offenen und geschlossenen Position des Ventils kann dieses auch Zwischenpositionen einnehmen.

Gemäß einer vorteilhaften Ausgestaltung der Erfindung ist vorgesehen, dass das Fahrzeug eine Steuereinrichtung zur Steuerung der Hackvorrichtung aufweist, die dazu konfiguriert ist, die Hackvorrichtung während der Fahrt des Fahrzeugs zur mechanischen Einwirkung auf eine Umgebung der durch die Erfassungsvorrichtung erkannten Stelle zu veranlassen. Die Steuereinrichtung zur Steuerung der Hackvorrichtung kann als eine gemeinsame Steuereinrichtung mit der Steuereirichtung zur Steuerung der Sprühvorrichtung ausgebildet sein oder als davon separate Steuereinrichtung.

Gemäß einer vorteilhaften Ausgestaltung der Erfindung ist vorgesehen, dass das Fahrzeug eine Halteeinrichtung zum Halten der Sprühvorrichtung umfasst, die dazu konfiguriert ist, die Sprühvorrichtung wahlweise einer von mindestens zwei unterschiedlichen Höhen gegenüber einem von dem Fahrzeug befahrenen Untergrund anzuordnen. Durch das Verändern der Höhe gegenüber dem Untergrund kann die Größe des Spritzbilds eingestellt werden, d.h. es kann die Größe der vom Herbizid bedeckten Fläche eingestellt werden. Die Halteeinrichtung kann dazu konfiguriert sein, die Stellung der Sprühvorrichtung manuell zu verändern oder alternativ über einen steuerbaren Antrieb.

Gemäß einer vorteilhaften Ausgestaltung der Erfindung ist vorgesehen, dass das Fahrzeug eine Abschirmvorrichtung zum zumindest teilweisen Abschirmen eines Bereichs zwischen der Sprühvorrichtung und einem von dem Fahrzeug befahrenen Untergrund gegenüber äu-ßeren Einflüssen, insbesondere Wind und/oder Sonneneinstrahlung, aufweist. Die Abschirmvorrichtung kann den Bereich zwischen der Sprühvorrichtung und dem Untergrund gegenüber äußeren Einflüssen abschirmen, insbesondere Wind und/oder Sonneneinstrahlung. Insofern kann einem unerwünschten Verwehen des Pflanzenschutz- oder Düngemittels, insbesondere Herbizids, in weitere von der Kulturpflanze entfernte Bereiche und/oder einem unerwünschten Verdunsten des durch die Sprühvorrichtung abgegebenen Pflanzenschutz- oder Düngemittels, insbesondere Herbizids, vor dem Auftreffen auf die erkannte Stelle entgegengewirkt werden. Zudem kann das sich durch das Sprühen des Pflanzenschutz- oder Düngemittels, insbesondere Herbizids, ergebende Spritzbild durch die Abschirmvorrichtung lokal beschränkt werden.

Gemäß einer vorteilhaften Ausgestaltung der Erfindung ist vorgesehen, dass die Abschirmvorrichtung mindestens eine Abschirmwand umfasst, welche um den Bereich zwischen der Sprühvorrichtung und dem von dem Fahrzeug befahrenen Untergrund herum angeordnet ist. Die Abschirmwand kann aus einem Metall oder einem Kunststoff ausgebildet sein. Bevorzugt ist die Abschirmwand vollständig um den Bereich umlaufend ausgebildet, also mit einem geschlossenen Querschnitt. Beispielsweise kann die Abschirmwand nach Art eines Rohrs ausgebildet sein, beispielsweise mit einem kreisförmigen oder rechteckigen Querschnitt. Alternativ kann die Abschirmwand nur teilweise um den Bereich umlaufend ausgebildet sein, also mit einem offenen Querschnitt. Insofern kann die Abschirmwand nach Art eines offenen Profils ausgestaltet sein.

Gemäß einer vorteilhaften Ausgestaltung der Erfindung ist vorgesehen, dass die Abschirmvorrichtung gegenüber der Sprühvorrichtung bewegbar und in unterschiedlichen Stellungen festlegbar ist, insbesondere in unterschiedlichen Höhen gegen einem von dem Fahrzeug befahrenen Untergrund. Hierdurch wird es möglich, die Abschirmvorrichtung an unterschiedliche Kulturpflanzen bzw. unterschiedliche Wuchshöhen der Kulturpflanzen anzupassen. Beispielsweise kann es bei klein gewachsenen Kulturpflanzen erforderlich sein, die Abschirmvorrichtung weiter abzusenken als dies bei hoch gewachsenen Kulturpflanzen der Fall ist. Das Bewegen der Abschirmvorrichtung gegenüber der Sprühvorrichtung kann manuell erfolgen oder alternativ über einen steuerbaren Antrieb.

Gemäß einer vorteilhaften Ausgestaltung der Erfindung ist vorgesehen, dass die Abschirmvorrichtung mindestens eine erste und ein zweite Abschirmwand aufweist, welche gegenüber der ersten Abschirmwand bewegbar und in unterschiedlichen Abschirmstellungen festlegbar ist. Die erste und zweite Abschirmwand können aneinander angepasste Querschnitte aufweisen, insbesondere derart, dass die Abschirmwände aneinander anliegen. Bevorzugt ist die erste Abschirmwand in Bezug auf die zweite Abschirmwand innenliegend angeordnet. Alternativ kann die erste Abschirmwand in Bezug auf die zweite Abschirmwand außenliegend angeordnet sein. Durch Bewegen der zweiten Abschirmwand gegenüber der ersten Abschirmwand kann der durch die Abschirmvorrichtung abgeschirmte Bereich zwischen der Sprühvorrichtung und dem Untergrund variiert werden. Es kann vorgesehen sein, dass das eine Verriegelungseinrichtung zum Festlegen der zweiten Abschirmwand gegenüber der ersten Abschirmwand vorhanden ist. Die Verriegelungseinrichtung kann eine Ausnehmung und/oder einen Bolzen, beispielsweise einen Federstift, umfassen.

Gemäß einer vorteilhaften Ausgestaltung der Erfindung ist vorgesehen, dass die Abschirmvorrichtung gegenüber der Sprühvorrichtung bewegbar und in unterschiedlichen Stellungen festlegbar ist, insbesondere in unterschiedlichen Höhen gegen einem von dem Fahrzeug befahrenen Untergrund.

Gemäß einer vorteilhaften Ausgestaltung der Erfindung ist vorgesehen, dass die Abschirmvorrichtung mindestens ein erstes und ein zweites Abschirmblech aufweist, welches gegenüber dem ersten Abschirmblech bewegbar und in unterschiedlichen Abschirmstellungen festlegbar ist.

Bei dem erfindungsgemäßen Fahrzeug kann es sich um ein Fahrzeug mit einem Antrieb handeln. Bevorzugt ist das Fahrzeug ein autonom fahrendes Fahrzeug. Optional kann die Sprühvorrichtung als Teil eines Anbaugeräts des Fahrzeugs vorgesehen sein. Alternativ ist es möglich, dass es sich bei dem Fahrzeug um einen Anhänger handelt, der für die Verwendung mit einer Zugmaschine, beispielsweise mit einem Traktor, vorgesehen ist.

Durch die Sprühvorrichtung kann, ein Pflanzenschutzmittel, beispielsweise ein Herbizid oder Fungizid, oder ein Düngemittel ausgebracht werden. Ferner ist es möglich, durch die Sprühvorrichtung Biostimulanzien, Pflanzenhilfsstoffe oder Bodenhilfsstoffe auszubringen.

Zur Lös u n g eingangs genannter Aufgabe trägt ferner ein Verfahren zum Betrieb eines Fahrzeugs zum Bekämpfen von Unkraut zwischen Kulturpflanzen bei, welches, insbesondere automatisiert, in einer Fahrtrichtung bewegbar ist und mindestens eine Hackvorrichtung aufweist, mit der Strukturen des Unkrauts während einer Bewegung des Fahrzeugs in der Fahrtrichtung durch mechanische Einwirkung zerstört werden, wobei an dem Fahrzeug mindestens eine Sprühvorrichtung angeordnet ist, über die ein Pflanzenschutz- oder Düngemittel, insbesondere Herbizid, oder ein Biostimulanz-, Pflanzenhilfs- oder Bodenhilfsmittel abgegeben wird, insbesondere wobei die Sprühvorrichtung in der Fahrtrichtung vor der Hackvorrichtung angeordnet ist, so dass die Sprühvorrichtung während der Bewegung des Fahrzeugs in der Fahrtrichtung ein Pflanzenschutz- oder Düngemittel, insbesondere Herbizid, oder ein Biostimulanz-, Pflanzenhilfs- oder Bodenhilfsmittel an einer Stelle abgibt, bevor die Hackvorrichtung diese Stelle erreicht.

Durch das erfindungsgemäße Verfahren können dieselben technischen Vorteile und Wirkungen erreicht werden, die bereits im Zusammenhang mit dem Fahrzeug gemäß der Erfindung erläutert wurden.

Auch wenn im Folgenden lediglich Bezug auf Pflanzenschutzmittel, insbesondere Herbizide, oder Düngemittel genommen wird, kann die Sprühvorrichtung bei dem erfindungsgemäßen Verfahren gleichwohl zum Ausbringen von Biostimulanz-, Pflanzenhilfs- oder Bodenhilfsmitteln verwendet werden.

Gemäß einer vorteilhaften Ausgestaltung sind die Kulturpflanzen als Rüben, insbesondere Zuckerrüben, ausgebildet.

Gemäß einer vorteilhaften Ausgestaltung ist vorgesehen, dass die Sprühvorrichtung zur Abgabe mehrerer aufeinanderfolgender Sprühstöße angesteuert wird, so dass sich an der durch die Erfassungsvorrichtung erkannten Stelle ein Spritzbild ergibt, welches durch zumindest teilweise Überlappung der durch die aufeinanderfolgenden Sprühstöße hervorgerufenen Einzel-Spritzbilder gebildet wird.

Gemäß einer konstruktiv vorteilhaften Ausgestaltung ist vorgesehen, dass eine Abgabedauer der Sprühvorrichtung pro Sprühstoß im Bereich von 5 ms bis 40 ms liegt, bevorzugt im Bereich von 10 ms bis 20 ms, besonders bevorzugt im Bereich von 7 ms bis 12 ms.

Gemäß einer vorteilhaften Ausgestaltung ist vorgesehen, dass mindestens eine von einem Benutzer vorgegebene Eingabegröße erfasst wird, und in Abhängigkeit der erfassten Eingabegröße(n)
- eine Anzahl aufeinanderfolgender Sprühstöße pro durch die Erfassungsvorrichtung erkannter Stelle und/oder
- eine Höhe der Sprühvorrichtung gegenüber einem von dem Fahrzeug befahrenen Untergrund, beispielsweise eine Höheneinstellung der Halteeinrichtung der Sprühvorrichtung, und/oder
- ein Druck zur Bereitstellung des Pflanzenschutz- oder Düngemittels, insbesondere Herbizids, für die Sprühvorrichtung und/oder
- eine Sprühbildbreite senkrecht zu einer Fahrtrichtung und/oder
- eine Sprühbildlänge in Fahrtrichtung
berechnet, und optional angezeigt, wird. Die Berechnung kann durch eine interne Recheneinheit des Fahrzeugs oder durch eine extern des Fahrzeugs vorgesehene Recheneinheit durchgeführt werden. Die externe Recheneinheit kann ein Server einer Cloud-Umgebung sein oder ein mobiles Endgerät, beispielsweise ein Tablet-Computer oder ein Smartphone. Die Anzeige kann über eine Anzeigeeinrichtung des Fahrzeugs oder eine extern des Fahrzeugs vorgesehene Anzeigeeinrichtung erfolgen. Die externe Anzeigevorrichtung kann Teil eines mobilen Endgeräts, beispielsweise eines Tablet-Computers oder eines Smartphones sein. Die jeweilige berechnete Größe wird bevorzugt zur Steuerung einer Einheit des Fahrzeugs verwendet. Die berechnete Anzahl aufeinanderfolgender Sprühstöße wird bevorzugt zur Steuerung der Sprühvorrichtung verwendet. Die berechnete Höhe der Sprühvorrichtung wird bevorzugt zur Steuerung eines Antriebs zur Höhenverstellung der Sprühvorrichtung verwendet. Der berechnete Druck zur Bereitstellung des Pflanzenschutz- oder Düngemittels, insbesondere Herbizids, wird bevorzugt zur Steuerung einer Pupe verwendet. Die berechnete Sprühbildbreite und/oder Sprühbildlänge wird bevorzugt zur Steuerung eines Antriebs zur Höhenverstellung der Sprühvorrichtung verwendet. Alternativ kann die jeweilige berechnete Größe lediglich angezeigt werden, so dass ein Benutzer die jeweilige Einstellung manuell vornehmen kann.

In diesem Zusammenhang ist es vorteilhaft, wenn die mindestens eine Eingabegröße eine oder mehrere der folgenden Größen ist/sind:
- eine gewünschte Breite des Spritzbilds senkrecht zur Fahrtrichtung;
- eine gewünschte minimale Länge des Spritzbilds in der Fahrtrichtung;
- eine Einsinktiefe eines Rads, insbesondere Tastrads, des Fahrzeugs;
- eine Abgabemenge des Pflanzenschutz- oder Düngemittels, insbesondere Herbizids, pro Flächeneinheit;
- eine Toleranzbreite senkrecht zur Fahrtrichtung, innerhalb derer die Kulturpflanzen angeordnet sind.

Gemäß einer konstruktiv vorteilhaften Ausgestaltung ist vorgesehen, dass das Pflanzenschutz- oder Düngemittel, insbesondere Herbizid, der Sprühvorrichtung unter einem Druck im Bereich von 2 bis 3 bar zugeführt wird, beispielsweise mittels einer Pumpe.

Gemäß einer vorteilhaften Ausgestaltung ist vorgesehen, dass die Sprühvorrichtung durch eine Überwachungsvorrichtung, insbesondere eine Kamera, überwacht wird und die Sprühvorrichtung in Abhängigkeit von durch die Überwachungsvorrichtung erfassten Überwachungsdaten, beispielsweise Bilddaten, gesteuert wird. Durch die Überwachungsvorrichtung, insbesondere die Kamera können Verstopfungen oder Leckagen, insbesondere im Bereich der Sprühvorrichtung, erkannt werden. Dabei kann das von der Sprühvorrichtung abgegebene Herbizid, der so genannte Düsenkegel, erfasst und ausgewertet, insbesondere klassifiziert, werden. Die Auswertung erfolgt bevorzugt durch einen Klassifikator, der durch maschinelles Lernen trainiert worden ist. Abhängig von den erfassten Überwachungsdaten, insbesondere Bilddaten, bzw. dem Ergebnis der Auswertung kann eine Durchflussmenge durch die Sprühvorrichtung, der Betriebsdruck der die Sprühvorrichtung mit Pflanzenschutz- oder Düngemittels, insbesondere Herbizid, versorgenden Pumpe und/oder ein Ansteuersignal zum Ansteuern der Düse verändert werden. Optional kann vorgesehen sein, dass die Erfassungsvorrichtung die Überwachungsvorrichtung umfasst oder identisch mit dieser ist.

Gemäß einer vorteilhaften Ausgestaltung ist vorgesehen, dass die Gesamtmenge an während der Fahrt des Fahrzeugs durch die eine oder die mehreren Sprühvorrichtungen des Fahrzeugs abgegebenen Pflanzenschutz- oder Düngemittel, insbesondere Herbizid, gespeichert wird. Dies ermöglicht es, die Gesamtmenge an ausgebrachtem Pflanzenschutz- oder Düngemittel, insbesondere Herbizid, nachzuweisen. Alternativ oder zusätzlich kann vorgesehen sein, dass die an den einzelnen Stellen der Kulturpflanzen ausgebrachte Menge an Pflanzenschutz- oder Düngemittel, insbesondere Herbizid, für mehrere, insbesondere alle, Stellen, gespeichert wird. Hierdurch wird es möglich, eine pflanzengenaue Kartierung der Abgabe von Pflanzenschutz- oder Düngemittel, insbesondere der Herbizidabgabe, bereitzustellen.

Gemäß einer vorteilhaften Ausgestaltung ist vorgesehen, dass das Fahrzeug eine Erfassungsvorrichtung aufweist, die eine Stelle an welcher eine Kulturpflanze angeordnet ist, während der Fahrt des Fahrzeugs erkennt. Bevorzugt klassifiziert die Erfassungsvorrichtung ferner die Kulturpflanzen im Hinblick auf Krankheiten der Kulturpflanze und/oder Schäden an der Kulturpflanze und/oder die Nähstoffversorgung oder Nährstoffunterversorgung der Kultur-pflanze. Diese Informationen werden bevorzugt an eine Datenbank, ein Farmmanagementsys-tem oder andere Systeme übermittelt. Hierdurch können diese Systeme und/oder diese Sys-teme nutzende Personen Entscheidungen treffen, die zu Handlungen führen, die eine Gesun-derhaltung der Kulturpflanzen und/oder Maximierung des Ertrages führen. Beispielsweise kann die Erfassungsvorrichtungen die Kulturpflanzen im Hinblick auf Herbizidschäden klassifi-zieren, so dass Rückschlüsse auf mögliche Ertragseffekte gezogen und/oder Herbizid-Mischungen angepasst werden können, um zukünftige negative Ertragseffekte zu minimieren. Alternativ oder zusätzlich kann eine geographische Karte der detektierten Krankheiten und/oder Schäden und/oder der Nähstoffversorgung oder Nährstoffunterversorgung der Zu-ckerrübe erstellt werden. Anhand dieser geographischen Karten wird es möglich, eine genau-ere Abschätzung von erforderlichen Pflanzenschutzmittelmengen und/oder insektiziden und/oder herbiziden Wirkstoffen und/oder Nährstofflösungen und/oder Pfanzenhilfsstoffen und/oder Biostimulanzien ermöglichen. Dies dient zu einer verbesserten Produktionsplanung und/oder Einkäufe der genannten Produktklassen.

Gemäß einer vorteilhaften Ausgestaltung ist vorgesehen, dass während der Fahrt des Fahrzeugs an der durch die Erfassungsvorrichtung erkannten Stelle ein Insektizid allein oder zusammen mit einem Herbizid abgegeben wird. Hierdurch können Schädigungen der Kulturpflanzen durch Insekten abgewendet werden und der Ertrag erhöht werden. Die Menge an ausgebrachtem Insektizid und oder Herbizid kann dokumentiert und nachgewiesen werden.

Gemäß einer vorteilhaften Ausgestaltung ist vorgesehen, dass während der Fahrt des Fahrzeugs an der durch die Erfassungsvorrichtung erkannten Stelle eine Nährstofflösung und/oder Biostimulanzien und/oder Pflanzenhilfsstoffe allein oder in Kombination mit Insektiziden und/oder mit Herbiziden auf die Kulturpflanze abgegeben wird. Hierdurch kann eine optimale Nährstoffversorgung der Kulturpflanze erreicht werden. Eine Nährstoffunterversorgung wird verhindert und somit eine Maximierung des Ertrages erreicht. Die Menge an ausgebrachter Nährstofflösung kann dokumentiert und nachgewiesen werden.

In diesem Zusammenhang ist es besonders vorteilhaft, wenn die zuvor beschriebene Abgabe einer Nährstofflösung und/oder von Biostimulanzien und/oder von Pflanzenhilfsstoffen, an der Stelle einer Kulturpflanze nur dann erfolgt, wenn die Kulturpflanze zuvor im Hinblick auf eine Nährstoffunterversorgung klassifiziert worden ist und eine Nährstoffunterversorgung dieser Kulturpflanze festgestellt wurde.

Gemäß einer vorteilhaften Ausgestaltung ist vorgesehen, dass die Kulturpflanze eine herbizidresistente Kulturpflanze, beispielsweise eine herbizidresistente Zuckerrübe, ist und mittels der Sprühvorrichtung ein Herbizid abgegeben wird. Auf diese Weise können Herbizidschäden an der Kulturpflanze vermieden und gleichwohl Unkraut mit dem Herbizid bekämpft werden.

Sofern das Fahrzeug eine Erfassungsvorrichtung aufweist, ist bevorzugt vorgesehen, dass anhand der Erfassungsvorrichtung Informationen über die Beschaffenheit des Felds, insbesondere die Beschaffenheit des Bodens und der Kulturpflanzen und der Unkräuter, gesammelt werden, die zu einer Abschätzung der Kulturpflanzenentwicklung und somit Rückschlüsse auf einen möglichen Ertrag liefern. Die Daten können in der Form erhoben werden, dass nicht das gesamte Feld mit allen Kulturpflanzen dokumentiert wird, sondern Plots einer bestimmten Größe. Des Weiteren können diese Fotoplots in der Art verteilt werden, dass Sie eine der Fragestellung repräsentativen Verteilung und/oder Größe entsprechen. Die repräsentative Verteilung und/oder Größe der Datenplots kann des Weiteren mittels einer Software erfolgen, die die relativen Ertragspotentiale in einem Feld unabhängig von der jeweiligen vorliegenden Kultur ermittelt. Hierdurch müssen weniger Daten übermittelt werden.

Alternativ oder zusätzlich zu den vorstehend erläuterten vorteilhaften Ausgestaltungen und Merkmalen des Verfahrens können auch die im Zusammenhang mit dem erfindungsgemä-ßen Fahrzeug erläuterten vorteilhaften Ausgestaltungen und Merkmale allein oder in Kombination Anwendung bei dem Verfahren finden.

Weitere Einzelheiten, Merkmale und Vorteile der Erfindung ergeben sich aus den Zeichnungen, sowie aus der nachfolgenden Beschreibung einer bevorzugten Ausführungsform anhand der Zeichnungen. Die Zeichnungen illustrieren dabei lediglich eine beispielhaft Ausführungsform der Erfindung, welche den Erfindungsgedanken nicht einschränkt.

### Kurze Beschreibung der Figuren

Die **Fig. 1** zeigt eine Seitenansicht einer Sprühvorrichtung gemäß einem Ausführungsbeispiel des erfindungsgemäßen Fahrzeugs.
Die **Fig. 2** zeigt eine alternative Seitenansicht der Sprühvorrichtung nach Fig. 1.
Die **Fig. 3** zeigt eine Draufsicht der Sprühvorrichtung nach Fig. 1.
Die **Fig. 4** zeigt eine perspektivische Ansicht der Sprühvorrichtung nach Fig. 1.
Die **Fig. 5** zeigt eine schematische Draufsicht eines ersten Ausführungsbeispiels des erfindungsgemäßen Fahrzeugs.
Die **Fig. 6** zeigt eine schematische Draufsicht eines zweiten Ausführungsbeispiels des erfindungsgemäßen Fahrzeugs.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

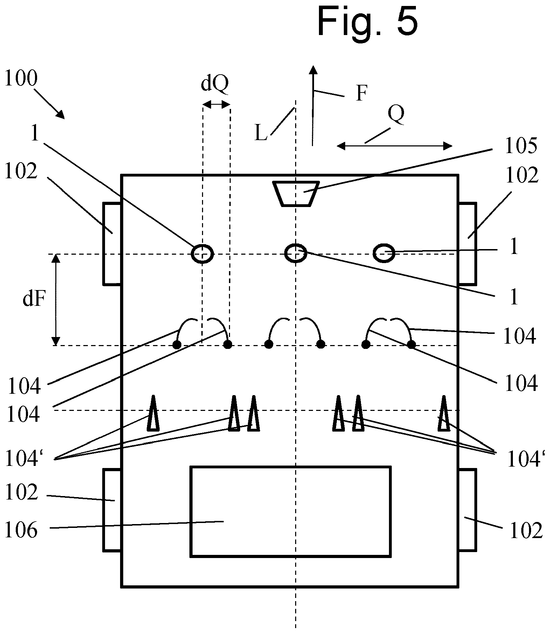

In der **Fig. 5** ist eine schematische Draufsicht eines ersten Ausführungsbeispiels des erfindungsgemäßen Fahrzeugs 100 zum Bekämpfen von Unkraut zwischen Kulturpflanzen, beispielsweise Rüben, insbesondere Zuckerrüben, dargestellt. Das Fahrzeug 100 ist, insbesondere automatisiert, in einer Fahrtrichtung F bewegbar. Hierzu umfasst das Fahrzeug 100 mehrere Laufräder 102. Die Laufräder 102 können als angetriebene Laufräder oder als nicht angetriebene Laufräder ausgebildet sein. Beispielsweise können die in Fahrtrichtung F hinteren Laufräder 102 angetrieben sein und die in Fahrtrichtung F vorderen Rädern können nicht angetrieben sein. Die vorderen Laufräder 102 können zudem lenkbar sein. Das Fahrzeug 100 kann sich somit frei auf einer landwirtschaftlichen Fläche bewegen. Typischerweise wird das Fahrzeug 100 dabei derart bewegt, dass es sich entlang einer Reihe von Kulturpflanzen bewegt, beispielsweise derart, dass eine Längsachse L des Fahrzeugs 100 parallel zu der Reihe von Kulturpflanzen ausgerichtet ist.

Das Fahrzeug umfasst mehrere Hackvorrichtungen 104, 104`, die dazu eingerichtet sind, Strukturen des Unkrauts während der Bewegung des Fahrzeugs 100 in der Fahrtrichtung F durch mechanische Einwirkung zu zerstören. Gemäß dem Ausführungsbeispiel sind bewegbare Hackvorrichtungen 104 und feststehende Hackvorrichtungen 104' vorgesehen. Die bewegbaren Hackvorrichtungen 104 können beispielsweise drehbare Schare aufweisen, die das Unkraut zerhacken und ggf. den das Unkraut beherbergenden Boden aufhacken. Das Fahrzeug 100 wird dabei derart entlang einer Reihe von Kulturpflanzen bewegt, dass die Hackvorrichtungen 104 auf zwei gegenüberliegenden Seiten der Reihe von Kulturpflanzen an diesen vorbeigeführt wird. Das Fahrzeug 100 umfasst eine Erfassungsvorrichtung 105 zum Erkennen von Kulturpflanzen, beispielsweise eine Kamera. Eine Steuervorrichtung 106 des Fahrzeugs 100 steuert die Hackvorrichtungen 104 dann derart, dass diese das zwischen den einzelnen erkannten Kulturpflanzenden angeordnete Unkraut beseitigen. Die feststehenden Hackvorrichtungen 104` hacken den Bereich neben und zwischen den Reihen von Kulturpflanzen.

Bei dem Ausführungsbeispiel gemäß Fig. 5 sind als Teil des Fahrzeugs ferner mehrere Sprühvorrichtungen 1 zur Abgabe eines Pflanzenschutz- oder Düngemittels, hier eines Herbizids, vorgesehen. Die Sprühvorrichtungen werden durch die Steuereinrichtung 106 derart gesteuert, dass während der Fahrt des Fahrzeugs 100 an der Stelle, an welcher die Erfassungsvorrichtung 106 eine Kulturpflanze erkannt hat, ein Herbizid abgegeben wird. Die Sprühvorrichtungen 1 sind in der Fahrtrichtung F gesehen, vor den Hackvorrichtungen 104, 104' angeordnet, so dass die Sprühvorrichtung 1 während der Bewegung des Fahrzeugs 100 in der Fahrtrichtung F das Herbizid an einer bestimmten Stelle abgeben kann, bevor die Hackvorrichtung 104, 104' diese Stelle erreicht. In Richtung der Längsachse L des Fahrzeugs 100 gesehen, besteht somit ein Abstand dF, um welchen die Sprühvorrichtungen 1 in Fahrtrichtung F vor den, hier bewegbaren, Hackvorrichtungen 104 angeordnet sind.

In der Querrichtung Q des Fahrzeugs 100 sind die Sprühvorrichtungen ebenfalls beabstandet gegenüber den Hackvorrichtungen 104 angeordnet. Es ergibt sich ein Versatz dQ der Sprühvorrichtungen 1 gegenüber den Hackvorrichtungen 104. Dieser ermöglicht es, dass die Sprühvorrichtungen oberhalb der Kulturpflanzen, insbesondere einer Reihe von Kulturpflanzen bewegt werden. Dabei werden die Sprühvorrichtungen 1 derart gesteuert, dass das Herbizid jeweils dann abgegeben wird, wenn sich die Sprühvorrichtung 1 oberhalb einer Kulturpflanze befindet.

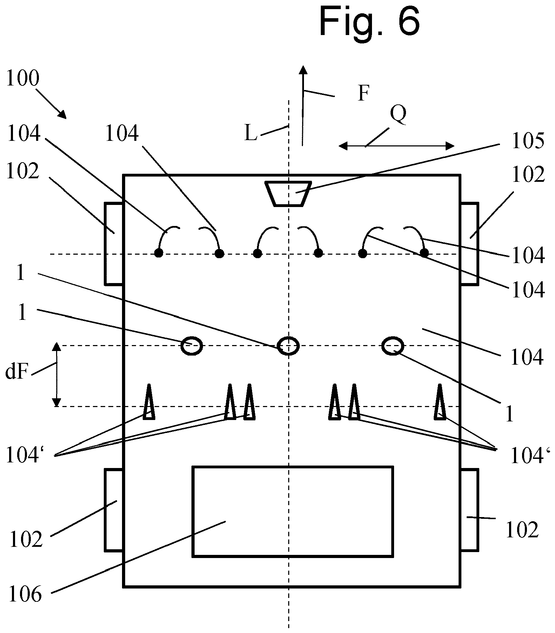

In **Fig. 6** ist ein zweiten Ausführungsbeispiel eines erfindungsgemäßen Fahrzeugs 100 in einer schematischen Draufsicht dargestellt. Das Fahrzeug 100 entspricht im Wesentlichen dem Fahrzeug gemäß dem ersten Ausführungsbeispiels, so dass auf die Beschreibung zu Fig. 5 verwiesen wird. Im Unterschied zu dem ersten Ausführungsbeispiel sind bei dem Fahrzeug 100 gemäß dem zweiten Ausführungsbeispiel die bewegbaren Hackvorrichtungen 104 in Fahrtrichtung vor den Sprühvorrichtungen 1 angeordnet. Die feststehenden Hackvorrichtungen 104` sind aber, wie im ersten Ausführungsbeispiels auch, in Fahrtrichtung F hinter den Sprühvorrichtungen 1 angeordnet.

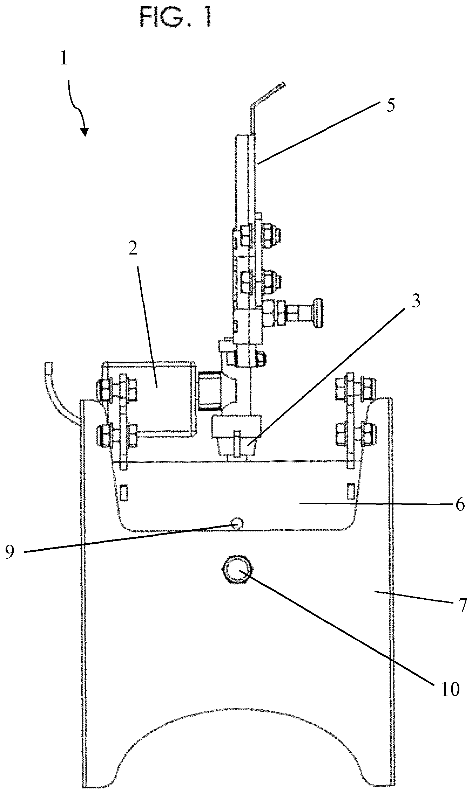

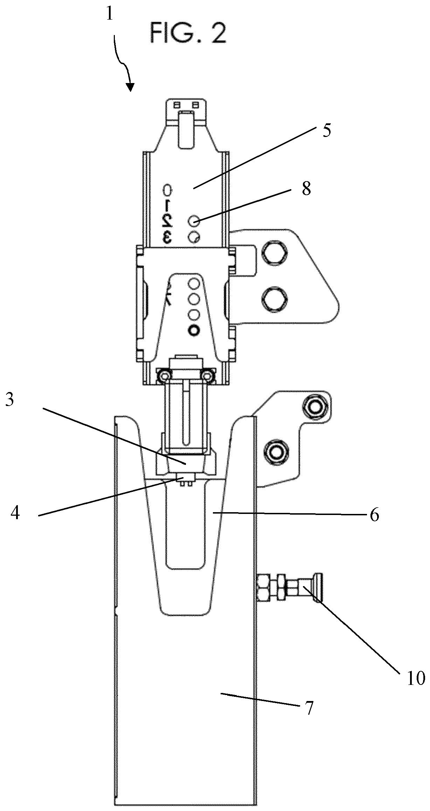

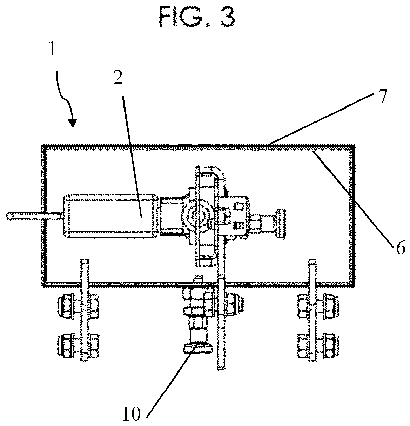

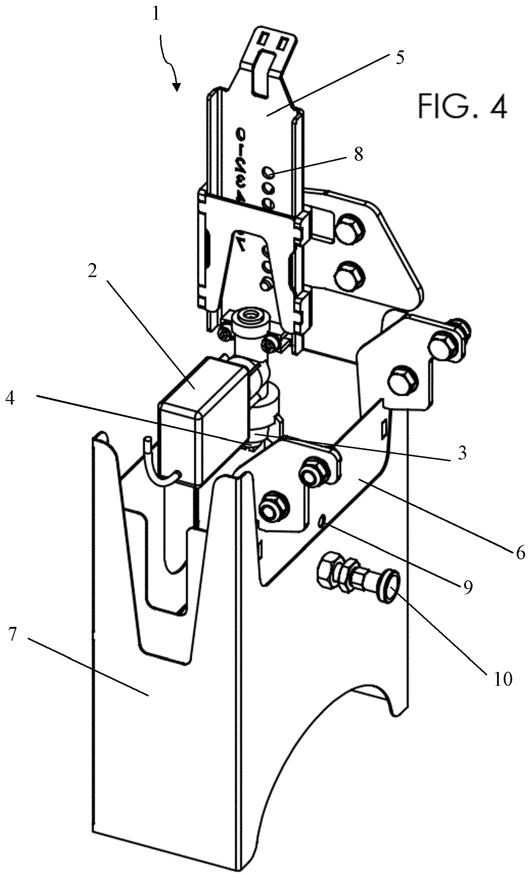

Einzelheiten der in den Ausführungsbeispielen nach Fig. 5 und 6 enthaltenen Sprühvorrichtungen 1 zur Abgabe eines Herbizids und der diese umgebenden Komponenten sollen nachfolgend anhand der Darstellungen in **Fig. 1 bis 4** erläutert werden.

Das jeweilige Herbizid kann in einem Tank (nicht dargestellt) des Fahrzeugs vorgehalten werden. Eine Pumpe (nicht dargestellt) kann den Betriebsdruck zum Betrieb der Sprühvorrichtung 1 bereitstellen.

Die Sprühvorrichtung 1 weist ein Ventil 2 auf. Über eine Zuleitung kann das durch die Pumpe auf Betriebsdruck gebrachte Herbizid zu dem Ventil 2 geleitet werden. Durch ein pulsförmiges Signal kann das Ventil 2 angesteuert werden. Von dem Ventil 2 wird das Herbizid zu einer Düse 4 geleitet, über welche das Herbizid ausgebracht wird. Die Düse 4 ist als Flachstrahldüse ausgestaltet und über einen Düsenhalter 3 an der Sprühvorrichtung 1 angebunden.

Die Sprühvorrichtung 1 kann über eine Haltevorrichtung 5 höhenverstellbar an einer dem Fahrzeug 100 montiert werden. Das Haltevorrichtung 5 weist Ausnehmungen 8, hier Durchgangslöcher, auf, durch welche die Sprühvorrichtung 1 in verschiedenen Höhen arretiert werden kann. Durch die Auswahl der Höhe über dem Untergrund kann die Größe der durch die Düse 4 benetzten Fläche, also das Spritzbild, beeinflusst werden.

Zum Abschirmen eines Bereichs zwischen der Sprühvorrichtung 1 und einem von dem Fahrzeug 100 befahrenen Untergrund - also dem Beriech unterhalb der Sprühvorrichtung 1 - ist eine Abschirmvorrichtung 11 vorgesehen. Die Abschirmvorrichtung 11 kann diesen Bereich gegenüber äußeren Einflüssen, insbesondere gegenüber Wind und/oder Sonneneinstrahlung, zumindest teilweise abschirmen.

Die Abschirmvorrichtung 11 gemäß dem Ausführungsbeispiel umfasst eine erste, innere Abschirmwand 6 sowie eine zweite, äußere Abschirmwand 7. Die Abschirmwände 6, 7 weisen eine rohrartige Gestalt auf und sind derart angeordnet, dass sich die Düse 4 der Sprühvorrichtung 1 im Wesentlichen auf einer Längsachse der rohrartigen Abschirmwände 6, 7 befinden. Insofern umgeben die rohrartigen Abschirmwände 6, 7 die Düse und den Bereich zwischen Düse 4 und Untergrund. Die erste, innere Abschirmwand 6 ist feststehend am Fahrzeug 100 angebunden. Die zweite, äußere Abschirmwand 7 ist gegenüber ersten Abschirmwand 6 bewegbar angeordnet. Insbesondere kann die zweite Abschirmwand 7 in der Höhe verschoben werden um Anpassungen an die Arbeitstiefe machen zu können und um die Höhe so einzustellen, dass sie die Kulturpflanzen in verschiedenen Wachstumsständen nicht streift und damit beschädigt. Die zweite, äußere Abschirmwand 7 kann auf die Höhe der Kulturpflanzen eingestellt werden. Dazu weist das innere Abschirmblech 6 Ausnehmungen, hier Durchgangslöcher 9, in verschiedenen Höhen auf, in die ein Federstift 10 eingreifen kann, um die äußere Abschirmwand 7 an der inneren Abschirmwand 6 zu fixieren.

### Bezugszeichenliste

- 1: Sprühvorrichtung
- 2: Ventil
- 3: Düsenhalter
- 4: Düse
- 5: Haltevorrichtung
- 6: innere Abschirmwand
- 7: äußere Abschirmwand
- 8: Ausnehmungen
- 9: Ausnehmungen
- 10: Federstift
- 11: Abschirmvorrichtung

- 100: Fahrzeug
- 102: Laufrad
- 103: Tastrad
- 104, 104`: Hackvorrichtung
- 105: Erfassungsvorrichtung
- 106: Steuereinrichtung

- F: Fahrtrichtung
- H: Höhenrichtung
- L: Längsachse
- Q: Querrichtung
- dF: Abstand in Fahrtrichtung
- dQ: Abstand in Querrichtung

## Patentansprüche

1. Fahrzeug (100) zum Bekämpfen von Unkraut zwischen Kulturpflanzen, welches, insbesondere automatisiert, in einer Fahrtrichtung (F) bewegbar ist und
mindestens eine Hackvorrichtung (104) aufweist, die dazu eingerichtet ist, Strukturen des Unkrauts während einer Bewegung des Fahrzeugs (100) in der Fahrtrichtung (F) durch mechanische Einwirkung zu zerstören,
**gekennzeichnet durch**
mindestens eine Sprühvorrichtung (1) zur Abgabe eines Pflanzenschutz-, Dünge-, Biostimulanz-, Pflanzenhilfs- oder Bodenhilfsmittels, insbesondere Herbizids.

2. Fahrzeug (100) nach Anspruch 1, **dadurch gekennzeichnet, dass** die Sprühvorrichtung (1) in der Fahrtrichtung (F) vor der Hackvorrichtung (104) angeordnet ist, so dass die Sprühvorrichtung (1) während der Bewegung des Fahrzeugs (100) in der Fahrtrichtung (F) ein Pflanzenschutz- oder Düngemittel, insbesondere Herbizid, an einer Stelle abgeben kann, bevor die Hackvorrichtung (104) diese Stelle erreicht.

3. Fahrzeug (100) nach einem der vorhergehenden Ansprüche, **dadurch gekennzeichnet, dass** die Sprühvorrichtung (1) in einer senkrecht zur Fahrtrichtung (F) angeordneten Querrichtung (Q) gegenüber der Hackvorrichtung (104) beabstandet angeordnet ist.

4. Fahrzeug (100) nach einem der vorhergehenden Ansprüche, **dadurch gekennzeichnet, dass** das Fahrzeug mehrere Hackvorrichtungen aufweist und die Sprühvorrichtung in einer senkrecht zur Fahrtrichtung (F) angeordneten Querrichtung (Q) gegenüber einer ersten der Hackvorrichtungen (104) und gegenüber einer zweiten der Hackvorrichtungen (104) beabstandet angeordnet ist.

5. Fahrzeug (100) nach einem der vorhergehenden Ansprüche, **dadurch gekennzeichnet, dass** das Fahrzeug (100) ein zumindest in einer Höhenrichtung (H) senkrecht zur Fahrtrichtung (F) bewegbar an einem Fahrgestell des Fahrzeugs (100) angebundenes Tastrad zum Abrollen an einem Untergrund aufweist, und die Sprühvorrichtung (1) derart mit dem Tastrad gekoppelt ist, dass die Sprühvorrichtung (1) einer Bewegung des Tastrads in der Höhenrichtung (H) folgen kann.

6. Fahrzeug (100) nach einem der vorhergehenden Ansprüche, **dadurch gekennzeichnet, dass** die Sprühvorrichtung (1) eine Flachstrahldüse (3) aufweist, die derart angerordnet ist, dass sie in einer Fahrtrichtung (F) des Fahrzeugs (100) einen ersten Abgabewinkel aufweist, der geringer ist als ein zweiter Abgabewinkel in einer zur Fahrtrichtung (F) senkrecht angeordneten Querrichtung (Q).

7. Fahrzeug (100) nach Anspruch 6, **dadurch gekennzeichnet, dass** der erste Abgabewinkel im Bereich von 5 Grad bis 10 Grad, insbesondere bei 7,5 Grad, liegt und der zweite Abgabewinkel im Bereich von 25 Grad bis 30 Grad, insbesondere bei 29 Grad, liegt.

8. Fahrzeug (100) nach einem der vorhergehenden Ansprüche, **dadurch gekennzeichnet, dass** die Hackvorrichtung (104) ein drehbar angeordnetes Hackelement, insbesondere einen Fräskopf oder ein Hackschar, aufweist.

9. Fahrzeug (100) nach einem der vorhergehenden Ansprüche, **gekennzeichnet durch** eine Erfassungsvorrichtung (105), die dazu eingerichtet ist, eine Stelle an welcher eine Kulturpflanze angeordnet ist, während der Fahrt des Fahrzeugs (100) zu erkennen.

10. Fahrzeug (100) nach Anspruch 9, **gekennzeichnet durch** eine Steuereinrichtung (106) zur Steuerung der Sprühvorrichtung (1), die dazu konfiguriert ist, die Sprühvorrichtung (1) während der Fahrt des Fahrzeugs (100) zur Abgabe eines Pflanzenschutz- oder Düngemittels, insbesondere Herbizids, an der durch die Erfassungsvorrichtung (105) erkannten Stelle zu veranlassen.

11. Fahrzeug (100) nach einem der Ansprüche 8 oder 9, **gekennzeichnet durch** eine Steuereinrichtung (106) zur Steuerung der Hackvorrichtung (104), die dazu konfiguriert ist, die Hackvorrichtung (104) während der Fahrt des Fahrzeugs (100) zur mechanischen Einwirkung auf eine Umgebung der durch die Erfassungsvorrichtung (105) erkannten Stelle zu veranlassen.

12. Fahrzeug (100) nach einem der vorhergehenden Ansprüche, **gekennzeichnet durch** eine Halteeinrichtung (5) zum Halten der Sprühvorrichtung (1), die dazu konfiguriert ist, die Sprühvorrichtung (1) wahlweise einer von mindestens zwei unterschiedlichen Höhen gegenüber einem von dem Fahrzeug (100) befahrenen Untergrund anzuordnen.

13. Fahrzeug (100) nach einem der vorhergehenden Ansprüche, **gekennzeichnet durch** eine Abschirmvorrichtung (11) zum zumindest teilweisen Abschirmen eines Bereichs zwischen der Sprühvorrichtung (1) und einem von dem Fahrzeug (1) befahrenen Untergrund gegenüber äußeren Einflüssen, insbesondere Wind und/oder Sonneneinstrahlung.

14. Fahrzeug (100) nach einem Anspruch 13, **dadurch gekennzeichnet, dass** die Abschirmvorrichtung (11) mindestens eine Abschirmwand (6, 7) umfasst, welche um den Bereich zwischen der Sprühvorrichtung (1) und dem von dem Fahrzeug (100) befahrenen Untergrund herum angeordnet ist.

15. Verfahren zum Betrieb eines Fahrzeugs (100) zum Bekämpfen von Unkraut zwischen Kulturpflanzen, welches, insbesondere automatisiert, in einer Fahrtrichtung (F) bewegbar ist und mindestens eine Hackvorrichtung (104) aufweist, mit der Strukturen des Unkrauts während einer Bewegung des Fahrzeugs (100) in der Fahrtrichtung (F) durch mechanische Einwirkung zerstört werden,
wobei an dem Fahrzeug (100) mindestens eine Sprühvorrichtung (1) angeordnet ist, über die ein Pflanzenschutz- oder Düngemittel, insbesondere Herbizid, oder Biostimulanz-, Pflanzenhilfs- oder Bodenhilfsmittel abgegeben wird, insbesondere wobei die Sprühvorrichtung (1) in der Fahrtrichtung (F) vor der Hackvorrichtung (104) angeordnet ist, so dass die Sprühvorrichtung (1) während der Bewegung des Fahrzeugs (100) in der Fahrtrichtung (F) ein Pflanzenschutz- oder Düngemittel, insbesondere Herbizid, oder Biostimulanz-, Pflanzenhilfs- oder Bodenhilfsmittel an einer Stelle abgibt, bevor die Hackvorrichtung (1) diese Stelle erreicht.
